# EUROPÄISCHE PATENTSCHRIFT

(11) **EP 0 835 782 B1**
(45) Veröffentlichungstag und Bekanntmachung des Hinweises auf die Patenterteilung: **02.05.2003**
(21) Anmeldenummer: 97115514.8
(22) Anmeldetag: 08.09.1997
(51) Int. Cl.: B60K 28/16

(54) **Verfahren und Vorrichtung zur Verhinderung von Momentenüberlast in einer Fahrzeugantriebseinrichtung**
Method and device for preventing a moment overload in a vehicle propulsion unit
Procédé et dispositif pour empêcher la surcharge du moment dans un dispositif de propulsion d'un véhicule

(30) Priorität: 10.10.1996 DE 19641761
(43) Veröffentlichungstag der Anmeldung: 15.04.1998
(73) Patentinhaber: Volkswagen Aktiengesellschaft, 38436 Wolfsburg (DE)
(72) Erfinder: Ramm, Nobert, Dipl.-Ing., 38106 Braunschweig (DE); Marquardt, Rolf, 38350 Helmstedt (DE)

(56) Entgegenhaltungen:
- EP-A- 0 355 975
- DE-A- 3 605 600
- DE-A- 3 615 638
- DE-A- 4 026 572
- DE-A- 4 127 149

## Beschreibung

Die Erfindung betrifft ein Verfahren zur Steuerung eines Automatikgetriebes oder eines automatisierten Schaltgetriebes in einem Kraftfahrzeug mit einem Antriebsaggregat, mindestens einem Schaltglied und wenigstens einem Antriebsrad, sowie eine Vorrichtung zur Steuerung eines Automatikgetriebes oder automatisierten Schaltgetriebes eines Kraftfahrzeuges mit einem Antriebsaggregat, einer Motorsteuerungseinrichtung, einer Getriebesteuerungseinrichtung, einer Antriebswelle, mindestens einem Schaltglied und wenigstens einem Antriebsrad.

Im normalen Fahrbetrieb eines Kraftfahrzeuges kommt es gelegentlich zu der Situation, daß eines oder alle Antriebsräder kurzzeitig die Traktion, d.h. den reibschlüssigen Kontakt zu einer Fahrbahn oder einem Untergrund verlieren und unter dem Motormoment mehr oder weniger leer durchdrehen. Dies tritt beispielsweise auf Oberflächen mit geringem Reibungskoeffizient, wie einer schneebedeckte Fahrbahn oder Eis auf.

Beispielsweise kommt es zu einem derartigen Durchdrehen, wenn ein Kraftfahrzeug mit entsprechender Beschleunigung über eine Bodenunebenheit, wie beispielsweise einen Bahnübergang fährt. Die Antriebsräder können dabei abheben und drehen unter der Einwirkung des Motordrehmoments mit hoher Drehzahl durch, wenn der Fahrer die Motorleistung nicht über die Rückstellung des Gaspedals reduziert.

Setzen die Antriebsräder anschließend wieder auf, wird die Traktion plötzlich wieder hergestellt und es kommt zu kurzzeitigen Momentenspitzen, die auf den Antriebsstrang wirken. Diese können bis zur Beschädigung der Antriebswelle und/oder des Getriebes undloder eines Differentialgetriebes oder eines CVT-Getriebes führen.

Aus der DE 41 27 149 ist ein elektronisch gesteuertes Automatikgetriebe bekannt, bei dem eine Schlupferkennungseinrichtung das Durchdrehen eines Antriebsrades erkennt. Ein übermäßig schnelles Schalten sowie ein Schalten unter Bewirkung eines Schaltrucks und sogar ein Schaltvorgang in einen niedrigeren Gang wird verhindert, wenn ein derartiger Zustand erkannt wird. Dies verhindert jedoch bei plötzlicher Wiederherstellung der Traktion der Antriebsräder nicht das Auftreten von Momentspitzen am Antriebsstrang.

Die EP 0 355 975 offenbart ein gattungsgemäßes Verfahren zur Steuerung eines Automatikgetriebes. Bei diesem Verfahren wird ein Haltedrehmoment im Getriebe reduziert, wenn der Drehzahlgradient eines Antriebsrades einen vorbestimmten Maximalwert überschreitet, so daß ein Schaltglied einen durchrutschenden Kontakt zwischen, Antriebsaggregat und Getriebe herstellt. Noch nicht optimal realisiert ist dabei die Rückkehr zum "Normalbetrieb".

Der vorliegenden Erfindung liegt daher die Aufgabe zugrunde, ein Verfahren und eine Vorrichtung der obengenannten Art zur Verfügung zu stellen, die Schäden durch Momentenüberlastung verhindern.

Diese Aufgabe wird erfindungsgemäß durch ein Verfahren der obengenannten Art mit den kennzeichnenden Merkmalen des Anspruchs 1 und bei einer Vorrichtung der obengenannten Art mit den kennzeichnenden Merkmalen des Anspruchs 8 gelöst.

Hierzu sind bei einem erfindungsgemäßen Verfahren folgende Schritte vorgesehen:
(a) Bestimmen eines ersten Drehzahlgradienten dv/dtᵢ von wenigstens einem Antriebsrad,
(b) Vergleichen des ermittelten Drehzahlgradienten dv/dtᵢ mit einem vorbestimmten Maximalwert, und
(c) Absenken eines Hydrauliksystemdrucks im Getriebe, wenn der erste Drehzahlgradient dv/dtᵢ₊₁ den vorbestimmten Maximalwert überschreitet, so daß ein oder alle Schaltglieder lediglich einen durchrutschenden Kontakt zwischen Antriebsaggregat und Getriebe herstellen.

Dies hat den Vorteil, daß Getriebekupplung und/oder -bremsen in einem Schlupfbetrieb sind und so Momentenstöße in diesen Vorrichtungen in Reibung bzw. Reibarbeit umgesetzt und so von dem Antriebsstrang abgeleitet werden. Schäden durch Momentenüberlastung sind so wirksam vermieden.

Dadurch, daß in Schritt (a) zur Bestimmung des ersten Drehzahlgradienten wenigstens eines Antriebsrades ein erster Drehzahlgradient einer Antriebswelle bestimmt wird, erzielt man in besonders vorteilhafter Weise ein einfaches und kostengünstiges System, da keine zusätzlichen Sensoren an den Antriebsrädern benötigt werden.

Ein einfaches und zuverlässig reagierendes System erzielt man dadurch, daß Schritt (a) derart erfolgt, daß eine erste und eine zweite Drehzahl Vᵢ₋₁ und Vᵢ bestimmt werden, aus denen der Drehzahlgradient dv/dtᵢ berechnet wird.

Dabei wird in vorteilhafter Weise in Schritt (c) der Drehzahlwert Vᵢ gespeichert, wenn der nachfolgende Drahzahlgradient dv/dtᵢ₊₁ einem vorbestimmten Maximalwert überschreitet. Dies ermöglicht auf einfache und zuverlässige Weise einen Rückweg in den Ausgang- und Normalzustand ohne Schlupf der Antriebsräder, wenn man zusätzlich folgende Schritte vorsieht:
(d) Fortlaufende Bestimmungen der Drehzahlen vⱼ und vⱼ₊₁ und Vergleich mit dem letzten Drehzahlwert vᵢ vor dem Durchdrehen eines Antriebsrades. Noch vor dem Erreichen des Wertes vᵢ zum Zeitpunkt t_{we} werden alle in Schritt (c) veränderten Steuerungsparameter rampenförmig zurückgenommen, um einen weichen Übergang in den Normalzustand zu erreichen. Dieser Vorhaltewert wird in Abhängigkeit vom Gaspedalwert der Überhöhung und dem Drehzahlgradienten dv/dtⱼ₊₁ über ein Kennfeld bestimmt.
(e) Vergleich des Wertes dv (Abstand zwischen dem errechneten Wert vᵢ und einem Wert vₓ durch Torsionsschwingung) und anschließender Korrektur (Adaption) des Vorhaltewertes dtᵥ bzw. dvᵥ.

Die Schutzfunktion vor Momentenüberlastung wird dadurch unterstützt, daß in Schritt (c) zusätzlich das Motormoment reduziert wird. Dies erfolgt in besonders vorteilhafter Weise dadurch, daß über eine Rücknahme des Zündzeitpunktes und/oder der Kraftstoffeinspritzmenge und/oder des Drosselklappentstellwinkels der aktuelle Motordrehmomentwert herabgesetzt wird. Außerdem kann vorgesehen sein, daß für die Dauer des Durchrutschen der Antriebsräder keine automatisch ausgelösten Schaltvorgänge ablaufen.

Bei einer Steuerungsvorrichtung zur Ausführung des genannten Verfahrens ist erfindungsgemäß folgendes vorgesehen:
- eine Meßvorrichtung zur Bestimmung von Drehzahlen und Drehzahlgradienten wenigstens eines An- oder Abtriebsrades,
- eine Vergleichsvorrichtung zum Vergleichen des ersten Drehzahlgradienten mit einem vorbestimmten Maximalwert, und
- eine Steuervorrichtung, die die Getriebesteuerung und/oder die Motorsteuerung derart ansteuert, daß ein Hydraulikgetriebdruck und/oder ein Motormoment herabgesetzt werden, wenn der Drehzahlgradient den vorbestimmten Maximalwert überschreitet, so daß das Schaltglied lediglich einen durchrutschenden Kontakt zwischen Antriebsaggregat und Getriebe herstellt.

In besonders Vorteilhafter Weise ist die Meßvorrichtung derart mit der Antriebswelle verbunden, daß zur Bestimmung des Drehzahlgradienten des Antriebsrades ein Drehzahlgradient der Abtriebswelle ermittelt wird. Dies ermöglicht eine einfache und kostengünstige Vorrichtung ohne zusätzliche Sensoren an den Antriebsrädern.

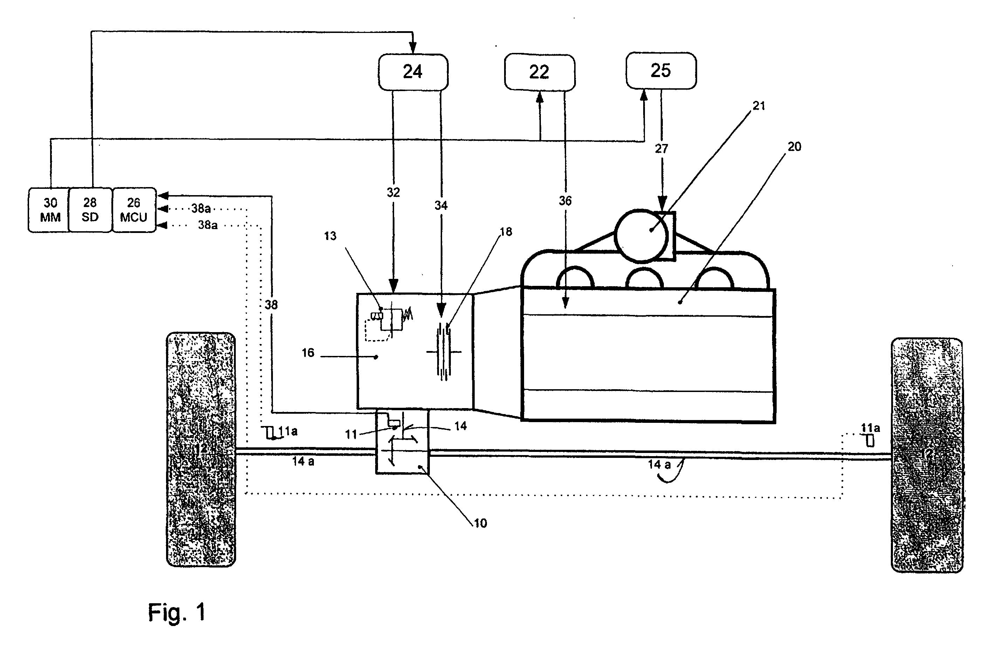

Weitere Merkmale, Vorteile und vorteilhafte Ausgestaltungen der Erfindung ergeben sich aus den abhängigen Ansprüchen, sowie aus der nachstehenden Beschreibung der Erfindung an Hand der beigefügten Zeichnung. Diese zeigt in Figur 1 ein Blockschaltbild zur Veranschaulichung der Wirkungsweise der vorliegenden Erfindung.

Darin ist ein Motor 20 dargestellt, der über einen Antriebsstrang die Antriebswellen 14a der Antriebsräder 12 antreibt. In dem Antriebsstrang befinden sich eine Getriebekupplung 18, ein Getriebe 16, eine Getriebewelle 14 und ein Differentialgetriebe 10.

Der Motor 20 wird von einer Motorsteuerungsvorrichtung 22 mittels eines Steuersignals 36 gesteuert. Die Laststeuerung des Motors 20 ist hier gesondert dargestellt. Diese erfolgt mittels einer Drosselklappensteuerungsvorrichtung 25, die Steuersignale 27 zu einem Drosselklappenstellmotor 21 sendet.

Das Getriebe 16 und die Kupplung 18 werden von einer Getriebesteuerungsvorrichtung 24 mittels der Signale 32 und 34 gesteuert. Diese Signale steuern beispielsweise den Hydraulikdruck in den Leitungen des Getriebes 16, das neben der Getriebekupplung 18 auch nicht dargestellte Getriebebremsen aufweisen kann.

Eine Meßvorrichtung 26 bestimmt die sukzessive Drehzahl der Antriebswelle 14 bzw. Radantriebswellen 14a mittels Drehzahlsensoren 11, 11a. Aus zwei aufeinanderfolgenden Drehzahlwerten kann in bekannter Weise durch Division der Differenz durch den Zeitabschnitt, der zwischen der Bestimmung der beiden Meßwerte vergangen ist, der Drehzahlgradient der Wellen 14, 14a (v-Sensorsignal) bestimmt werden. Bei bekannten Motor- und Antriebsstrangverhältnissen sind bei maximaler Beschleunigung nur festgelegte, vorbestimmte Drehzahlgradienten möglich. Diese sind in einer Vergleichsvorrichtung 28 abgespeichert.

Die Vergleichsvorrichtung 28 vergleicht die von der Meßvorrichtung 26 gemessenen Drehzahlgradienten mit den abgespeicherten, vorbestimmten Maximalwerten. Wird der vorbestimmte Maximalwert überschritten, ist dies ein Indiz für ein durchdrehendes Rad, d.h. wenigstens ein Antriebsrad 12 hat seinen reibschlüssigen Kontakt (Traktion) mit einer Oberfläche, wie beispielsweise einer Fahrbahn, verloren.

Die vorletzte gemessene Drehzahl Vⱼ₋₁ wird gespeichert und von einer Vorrichtung 30 ein MM-Signal an die Motorsteuerung 22 und ein SD-Signal an die Getriebesteuerung 24 ausgegeben. Dies bewirkt eine Reduktion des Motormomentes sowie eine Erniedrigung des Systemruckes im Getriebe auf den Minimalwert. Die Signale MM und/oder SD haben vorzugsweise eine Dauer von weniger als eine Sekunde.

In der Folge befinden sich Getriebekupplungen 18 und/oder Getriebebremsen durch Hauptdruck- oder Einzeldruckabsenkung in einem Drucksteller 13 im "Schlupfbetrieb". Kommt es in diesem Zustand wieder zum Kraftschluß der Antriebsräder 12, d.h. stellt sich wieder Traktion ein, so tritt eine kurzzeitige Momentenspitze im Antriebsstrang auf und das Schaltglied 18 rutscht durch. Momentenspitzen werden so in Reibarbeit (Wärme) umgewandelt und vom Antriebsstrang abgeleitet. Dies schützt die Komponenten des Antriebsstranges wie beispielsweise Getriebe 16, Abtriebswelle 14 und/oder Differential 10 vor Schäden durch Momentenüberlastung.

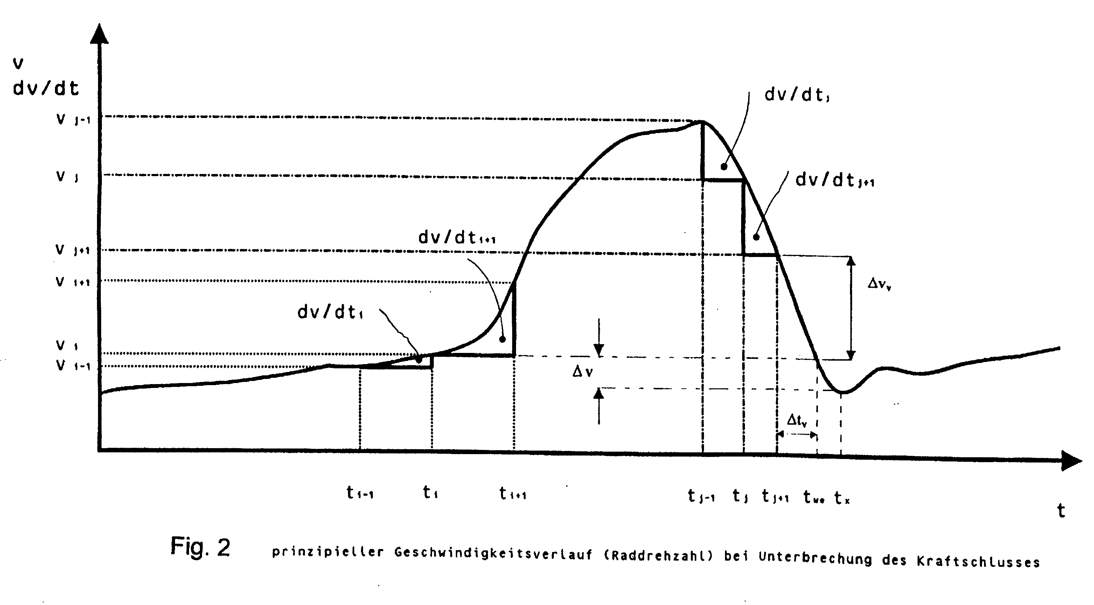

Zum besseren Verständnis der Abläufe ist der Beschreibung noch die Figur 2 beigelegt, in der in prinzipieller Darstellungsweise der Raddrehzahlverlauf über die Zeit bei Unterbrechung des Kraftschlusses dargestellt ist.

Die vorgestellte Erfindung ist neben Automatikgetrieben auch auf automatisiert betriebenen Schaltgetrieben mit besonderem Vorteil anwendbar.

### BEZUGSZEICHENLISTE

- MM: Signal Motormoment
- SD: Signal Systemdruck
- 10: Differentialgetriebe
- 11,11a: Drehzahlsensoren
- 12: Antriebsräder
- 13: Druckregler
- 14: Abtriebswelle
- 16: Getriebe
- 18: Schaltglied / Kupplung
- 20: Antriebsaggregat / Motor
- 21: Drosselklappensteller
- 22: Motorsteuerung
- 24: Getriebesteuerung
- 25: Drosselklappensteuerung
- 26: Meßvorrichtung
- 27: Steuersignal für Drosselklappe
- 28: Vergleichsvorrichtung
- 30: Steuervorrichtung
- 32: Steuersignal für Getriebe
- 34: Steuersignal für Schaltglied
- 36: Steuersignal für Motor
- 38: Meßleitung

## Patentansprüche

1. Verfahren zur Steuerung eines Automatikgetriebes oder eines automatisierten Schaltgetriebes eines Kraftfahrzeuges mit einem Antriebsaggregat, einem Schaltglied und wenigstens einem Fahrzeugantriebsrad, wobei folgende Schritte durchgeführt werden:
(a) Bestimmen eines Drehzahlgradienten (dV/dtᵢ₊₁) des wenigstens einem Antriebsrad,
(b) Vergleichen des Drehzahlgradienten mit einem vorbestimmten Maximalwert, und
(c) Reduktion des Haltedrehmomentes des Schaltgliedes, wenn der Drehzahlgradient den vorbestimmten Maximalwert überschreitet, so daß das Schaltglied lediglich einen durchrutschenden Kontakt zwischen Antriebsaggregat und Antriebsrad herstellt.
**DADURCH GEKENNZEICHNET, daß**
Schritt a) derart erfolgt daß ein erster (Vᵢ) und zweiter (Vᵢ₊₁) Drehzahlwert sukzessiv bestimmt werden, aus denen der Drehzahlgradient (dV/dtᵢ₊₁) berechnet wird, daß in
Schritt c) der erste Drehzahlwert (Vᵢ), als letzter Drehzahl vor dem Durchdrehen des Antriebsrades gespeichert wird, wenn der berechnete Drehzahlgradient (dV/dtᵢ₊₁) den vorbestimmten Maximalwert überschreitet und daß in einem weiteren
Schritt d) eine fortlaufende Bestimmung der weiteren Drehzahl (Vⱼ, Vⱼ₊₁) des Antriebsrades und ein Vergleich mit dem gespeicherten Drehzahlwert (Vᵢ) durchgeführt wird und die im Schritt (c) vorgenommene Änderung des Haltedrehmoments noch vor Erreichen des gespeicherten Drehzahlwertes (Vᵢ) rampenförmig zurückgenommen wird.

2. Verfahren nach Anspruch 1, **dadurch gekennzeichnet, dass** in Schritt (a) zur Bestimmung des ersten Drehzahlgradienten wenigstens eines Antriebsrades ein erster Drehzahlgradient einer Rad-Antriebswelle oder einer Getriebeabtriebswelle bestimmt wird.

3. Verfahren nach wenigstens einem der vorstehenden Ansprüche, **dadurch gekennzeichnet, dass** in Schritt (c) zusätzlich ein Motormoment herabgesetzt wird.

4. Verfahren nach Anspruch 3, **dadurch gekennzeichnet, dass** das Motormoment durch einen Eingriff in die Zündung, insbesondere durch ein Zurückstellen des Zündwinkels auf "spät", und/oder durch Schließen einer Drosselklappe und/oder Verminderung der Kraftstoffmenge des Antriebsaggregats herabgesetzt wird.

5. Vorrichtung zur Steuerung eines Automatikgetriebes (16) eines Kraftfahrzeuges mit einem Antriebsaggregat (20), einer Motorsteuerung (22), einer Getriebesteuerung (24), einer Antriebswelle (14), einem Schaltglied (18) und wenigstens einem Antriebsrad (12), arbeitend nach einem der Ansprüche 1 bis 4, **dadurch gekennzeichnet, dass** folgendes vorgesehen ist, eine Messvorrichtung (26) zur Bestimmung eines Drehzahlgradienten wenigstens eines Antriebsrades (12), eine Vergleichsvorrichtung (28) zum Vergleichen des ersten Drehzahlgradienten mit einem über Kennfeldwerte vorbestimmten Maximalwert, und eine Steuervorrichtung (30), die die Getriebesteuerung (24) derart ansteuert, dass ein Hydraulikgetriebedruck herabgesetzt wird, wenn der Drehzahlgradient den vorbestimmten Maximalwert überschreitet, so dass das Schaltglied (18) lediglich einen durchrutschenden Kontakt zwischen Antriebsaggregat (20) und Getriebe (16) herstellt.

6. Vorrichtung nach Anspruch 5, **dadurch gekennzeichnet, dass** die Messvorrichtung (26) derart mit der Antriebswelle (14) verbunden ist, dass zur Bestimmung des Drehzahlgradienten des Antriebsrades (12) ein Drehzahlgradient der Antriebswelle (14) gemessen wird.

7. Vorrichtung nach Anspruch 5 oder 6, **dadurch gekennzeichnet, dass** zusätzlich eine Speichervorrichtung für wenigstens einen vorbestimmten Wert der Drehzahl vorgesehen ist.

8. Vorrichtung nach einem der Ansprüche 5 bis 7, **dadurch gekennzeichnet, dass** für die Dauer des Durchrutschens keine automatischen Schaltübergänge erfolgen.

9. Vorrichtung nach mindestens einem der Ansprüche 5 bis 8, **dadurch gekennzeichnet, daß** die Steuereinrichtung (30) die Motorsteuerung (22) derart ansteuert, dass ein Motormoment herabgesetzt wird, wenn der Drehzahlgradient den vorbestimmten Maximalwert überschreitet.

## Claims

1. Method for controlling an automatic transmission or an automated shift gearbox of a motor vehicle having a drive assembly, a shift member and at least one vehicle driving wheel, the following steps being carried out:
(a) determination of a rotational speed gradient (dv/dtᵢ₊₁) of the at least one driving wheel,
(b) comparing the rotational speed gradient with a predetermined maximum value, and
(c) reduction of the holding torque of the shift member when the rotational speed gradient exceeds the predetermined maximum value, so that the shift member makes only slipping contact between the drive assembly and the driving wheel,
**characterized in that** step a) takes place in such a way that a first (Vᵢ) and a second (Vᵢ₊₁) rotational speed value, from which the rotational speed gradient (dV/dtᵢ₊₁) is calculated, are determined in succession, **in that**, in step c), the first rotational speed value (Vᵢ) is stored as the last rotational speed before the spinning of the driving wheel when the calculated rotational speed gradient (dV/dtᵢ₊₁) exceeds the predetermined maximum value, and **in that**, in a further step d), a continuous determination of the further rotational speed (Vⱼ, Vⱼ₊₁) of the driving wheel and a comparison with the stored rotational speed value (Vⱼ) is carried out, and the change of the holding torque, carried out in step (c), is cut back in a ramp-shaped manner even before the stored rotational speed value (Vⱼ) is reached.

2. Method according to Claim 1,
**characterized in that**, in step (a) for determining the first rotational speed gradient of at least one driving wheel, a first rotational speed gradient of the wheel drive shaft or of the transmission output shaft is determined.

3. Method according to at least one of the preceding claims,
**characterized in that**, in step (c), an engine torque is additionally reduced.

4. Method according to Claim 3,
**characterized in that** the engine torque is reduced by action on the ignition, in particular by a resetting of the ignition angle to "retarded", and/or by the closing of the throttle valve and/or by a diminution in the fuel quantity of the drive assembly.

5. Device for controlling an automatic transmission (16) of the motor vehicle having a drive assembly (20), an engine control (22), a transmission control (24), a drive shaft (14), a shift member (18) and at least one driving wheel (12), operating according to one of Claims 1 to 4, **characterized in that** the following are provided, a measuring device (26) for determining the rotational speed gradient into at least one driving wheel (12), a comparator device (28) for comparing the first rotational speed gradient with a maximum value predetermined via characteristic diagram values, and a control device (30) which activates the transmission control (24) in such a way that a hydraulic transmission pressure is reduced when the rotational speed gradient exceeds the predetermined maximum value, so that the shift member (18) makes only slipping contact between the drive assembly (20) and the transmission (16).

6. Device according to Claim 5,
**characterized in that** the measuring device (26) is connected to the drive shaft (14) in such a way that a rotational speed gradient of the drive shaft (14) is measured in order to determine the rotational speed gradient of the driving wheel (12).

7. Device according to Claim 5 or 6,
**characterized in that**, additionally, a stored device is provided with at least one predetermined value of the rotational speed.

8. Device according to one of Claims 5 to 7,
**characterized in that** no automatic shift transmissions take place for the duration of the slip.

9. Device according to at least one of Claims 5 to 8,
**characterized in that** the control device (30) activates the engine control (22) in such a way that an engine torque is reduced when the rotational speed gradient exceeds the predetermined maximum value.

## Revendications

1. Procédé de commande d'une boîte de vitesse automatique ou d'une boîte de vitesse à changement de vitesses automatisée d'un véhicule automobile, comprenant une unité d'entraînement, un organe de changement de vitesses et au moins une roue motrice du véhicule, dans lequel on réalise les étapes suivantes :
(a) détermination d'un gradient de vitesse de rotation (dV/dtᵢ₊₁) de l'au moins une roue motrice du véhicule,
(b) comparaison du gradient de vitesse de rotation avec une valeur maximale prédéfinie, et
(c) réduction du couple de maintien de l'organe de changement de vitesse lorsque le gradient de vitesse de rotation dépasse la vitesse maximale prédéfinie, de sorte que l'organe de changement de vitesse ne produise qu'un contact de glissement entre l'unité d'entraînement et la roue motrice,
**caractérisé en ce que**
l'étape a) s'effectue de telle sorte que l'on détermine successivement une première (Vᵢ) et une deuxième (Vᵢ₊₁) valeur de vitesse de rotation, à partir desquelles on calcule le gradient de vitesse de rotation (dV/dtᵢ₊₁), **en ce que** dans
l'étape c), la première valeur de vitesse de rotation (Vᵢ) est mémorisée en tant que dernière vitesse de rotation avant la rotation de la roue motrice, lorsque le gradient de vitesse de rotation calculé (dv/dtᵢ₊₁) dépasse la valeur maximale prédéfinie et **en ce que** dans une autre
étape d), on réalise une détermination en continu de l'autre vitesse de rotation (Vⱼ, Vⱼ₊₁) de la roue motrice et une comparaison avec la valeur de vitesse de rotation (Vᵢ) mémorisée et la modification du couple de maintien effectuée dans l'étape c) est encore diminuée en forme de rampe avant que la valeur de vitesse de rotation mémorisée (Vᵢ) soit atteinte.

2. Procédé selon la revendication 1, **caractérisé en ce que** dans l'étape (a), pour déterminer le premier gradient de vitesse de rotation d'au moins une roue motrice, on détermine un premier gradient de vitesse de rotation d'un arbre d'entraînement de la roue ou d'un arbre de sortie de boîte de vitesse.

3. Procédé selon au moins l'une quelconque des revendications précédentes, **caractérisé en ce que** dans l'étape (c), on réduit en outre un couple moteur.

4. Procédé selon la revendication 3, **caractérisé en ce que** le couple moteur est réduit en intervenant sur l'allumage, en particulier en décalant vers l'arrière l'angle d'allumage sur "retard", et/ou en fermant une soupape d'étranglement et/ou en réduisant la quantité de carburant de l'unité d'entraînement.

5. Dispositif de commande d'une boîte de vitesse automatique (16) d'un véhicule automobile comprenant une unité d'entraînement (20), une commande du moteur (22), une commande de la boîte de vitesse (24), un arbre d'entraînement (14), un organe de changement de vitesse (18) et au moins une roue motrice (12), fonctionnant selon l'une quelconque des revendications 1 à 4, **caractérisé en ce qu'**il est prévu ce qui suit, un dispositif de mesure (26) pour déterminer un gradient de vitesse de rotation d'au moins une roue motrice (12), un dispositif de comparaison (28) pour comparer le premier gradient de vitesse de rotation avec une, valeur maximale prédéfinie par des valeurs du champ caractéristique, et un dispositif de commande (30), qui commande la commande de la boîte de vitesse (24) de telle sorte qu'une pression de la boîte de vitesse hydraulique soit abaissée lorsque le gradient de vitesse de rotation dépasse la valeur maximale prédéfinie, de sorte que l'organe de changement de vitesse (18) produite seulement un contact de glissement entre l'unité d'entraînement (20) et la boîte de vitesse (16).

6. Dispositif selon la revendication 5, **caractérisé en ce que** le dispositif de mesure (26) est connecté à l'arbre d'entraînement (14) de telle sorte qu'un gradient de vitesse de rotation de l'arbre d'entraînement (14) soit mesuré pour déterminer le gradient de vitesse de rotation de la roue motrice (12).

7. Dispositif selon la revendication 5 ou 6, **caractérisé en ce que** l'on prévoit en outre un dispositif de mémorisation pour au moins une valeur prédéfinie de la vitesse de rotation.

8. Dispositif selon l'une quelconque des revendications 5 à 7, **caractérisé en ce qu**'aucun changement de vitesse automatique n'est effectué pendant toute la durée du glissement.

9. Dispositif selon au moins l'une quelconque des revendications 5 à 8, **caractérisé en ce que** le dispositif de commande (30) commande la commande du moteur (22) de telle sorte qu'un couple moteur soit abaissé lorsque le gradient de vitesse de rotation dépasse la valeur maximale prédéfinie.
